# EUROPEAN PATENT SPECIFICATION

(11) **EP 1 884 397 B1**
(45) Date of publication and mention of the grant of the patent: **22.04.2009**
(21) Application number: 07005361.6
(22) Date of filing: 15.03.2007
(51) Int. Cl.: B60K 25/08, F16F 9/32

(54) **Hydraulic shock absorber**
Hydraulischer Stoßdämpfer
Absorbeur de choc hydraulique

(30) Priority: 27.07.2006 JP 2006205411
(43) Date of publication of application: 06.02.2008
(73) Proprietor: SHOWA CORPORATION, Gyoda-shi, Saitama (JP)
(72) Inventor: Murakami, Yosuke c/o SHOWA CORPORATION, Shizuoka (JP)
(74) Representative: Casalonga, Axel

(56) References cited:
- JP-A- 56 082 680
- JP-A- 2003 097 627

## Description

The present invention relates to a hydraulic shock absorber for a vehicle.

Regarding a hydraulic shock absorber for a vehicle, as described in Japanese Patent Publication (JP-B) No. 63-23957 (patent document 1), there is a structure in which an inner tube in an axle side is slidably inserted into an outer tube in a vehicle body side. A partition wall member is provided in an inner periphery of the inner tube. A working fluid chamber is comparted on a lower side of the partition wall member. An oil reservoir chamber is comparted on an upper side of the partition wall member. A piston rod attached to the outer tube side is inserted into the working fluid chamber through the partition wall member. A piston sliding within the working fluid chamber is provided in a leading end portion of the piston rod, and a suspension spring is interposed between an upper spring bearing in the piston rod side and a lower spring bearing in a bottom portion side of the inner tube, within the working fluid chamber of the inner tube.

In the hydraulic shock absorber described in the patent document 1, when the suspension spring repeats extension and contraction while accompanying a torsion between the upper and lower spring bearings, the suspension spring receives a rotational friction resistance force from the upper and lower spring bearings, and it is difficult to smoothly execute the extension and contraction of the suspension spring.

In this case, in JP-A-2003-97627 (patent document 2), there is disclosed a hydraulic shock absorber in which an inner tube in a vehicle body side is slidably inserted to an outer tube in an axle side. A rotational friction resistance force reducing means is provided between an upper spring bearing and a collar, at a time of interposing a suspension spring between the upper spring bearing in the collar side supported to a cap of the inner tube, and a lower spring bearing in a hollow pipe side provided in a standing manner in a bottom portion of the outer tube.

Since the suspension spring is interposed between the lower spring bearing in the bottom portion side of the inner tube and the upper spring bearing in the piston rod side, an assembling procedure is as follows at a time when it is intended to employ the rotational friction resistance force reducing means in the patent document 2 in the hydraulic shock absorber in the patent document 1. After inserting the lower spring bearing and the suspension spring from the upper end of the inner tube, the upper spring bearing and the friction resistance force reducing means are dropped down on the suspension spring from the upper end of the inner tube, and the piston rod and the piston are further assembled on the friction resistance force reducing means. It is difficult to accurately seat the upper spring bearing and the friction resistance force reducing means on the suspension spring in accordance with correct assembling order and posture.

An object of the present invention is to improve an assembling characteristic while reducing rotational friction which a spring bearing applies to a suspension spring, in a hydraulic shock absorber in which the suspension spring is interposed between a lower spring bearing in a bottom portion side of an inner tube and an upper spring bearing in a piston support member side.

The present invention relates to a hydraulic shock absorber. An inner tube in an axle side is slidably inserted into an outer tube in a vehicle body side. A partition wall member is provided in an inner periphery of the inner tube. A working fluid chamber is provided on a lower side of the partition wall member. An oil reservoir chamber is provided on an upper side of the partition wall member. A piston support member attached to the outer tube side is inserted into the working fluid chamber through the partition wall member. A piston sliding within the working fluid chamber is provided in a leading end portion of the piston support member. A suspension spring is interposed between an upper spring bearing in the piston support member side and a lower spring bearing in a bottom portion side of the inner tube, within the working fluid chamber of the inner tube. The upper spring bearing is attached to the leading end portion of the piston support member, with the leading end portion being closer to the suspension spring than the piston, and in such a manner as to be rotatable and to be prevented from falling away.

The present invention will be more fully understood from the detailed description given below and from the accompanying drawings which should not be taken to be a limitation on the invention, but are for explanation and understanding only.
The drawings:
FIG. 1 is a cross sectional view showing a whole of a hydraulic shock absorber;
FIG. 2 is a cross sectional view showing a spring load adjusting apparatus;
FIG. 3 is a cross sectional view showing a lower structure of a damping force adjusting apparatus;
FIG. 4 is a cross sectional view showing an upper structure of the damping force adjusting apparatus;
FIG. 5 is a cross sectional view showing an upper spring bearing attaching structure;
FIGS. 6A and 6B show the upper spring bearing, in which FIG. 6A is a plan view and FIG. 6B is a cross sectional view along a line B-B in FIG. 6A;
FIG. 7 is a cross sectional view showing a bearing member; and
FIG. 8 is a cross sectional view showing a bearing race.

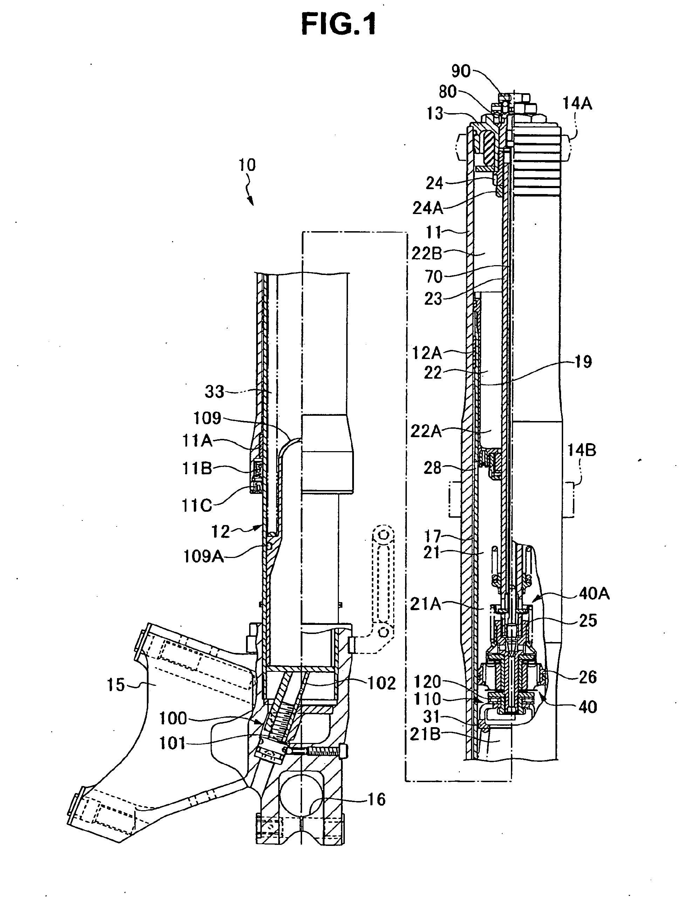

A front fork, which may be a hydraulic shock absorber, 10 is constituted by an inverted type front fork in which an outer tube 11 is arranged in a vehicle body side, and an inner tube 12 is arranged in a wheel side, and is structured, as shown in FIGS. 1 to 4. The inner tube 12 is slidably inserted to an inner portion of the outer tube 11 via a guide bush 11A fixed to an inner periphery of a lower end opening portion of the outer tube 11. A guide bush 12A is fixed to an outer periphery of an upper end opening portion of the inner tube 12. Reference numeral 11B denotes an oil seal, and reference numeral 11C denotes a dust seal. A cap 13 is screwed to the upper end opening portion of the outer tube 11 in a liquid tight manner. Vehicle body side mounting members 14A and 14B are provided in an outer periphery of the outer tube 11. An axle bracket 15 is inserted and attached to the lower end opening portion of the inner tube 12 in a liquid tight manner so as to construct a bottom portion of the inner tube 12, and an axle mounting hole 16 is provided in the axle bracket 15.

The front fork 10 comparts an inner periphery of the outer tube 11, an outer periphery of the inner tube 12, and an annular oil chamber 17 comparted by two guide bushes 11A and 12A mentioned above.

The front fork 10 is provided with a partition wall member 19 in a liquid tight manner in an upper end side inner periphery of the inner tube 12 via an O-ring or the like, comparts a working fluid chamber 21 on a lower side of a rod guide portion 19A of the partition wall member 19, and comparts an oil reservoir chamber 22 on an upper side of the partition wall member. A lower region in the oil reservoir chamber 22 corresponds to an oil chamber 22A, and an upper region corresponds to an air chamber 22B.

The front fork 10 is structured such that a piston rod 23 attached to the outer tube 11 is slidably inserted to the rod guide portion 19A of the partition wall member 19. Specifically, a hollow piston rod 23 is screwed to a mounting collar 24 screwed to a lower end portion of a center portion of the cap 13, and is fixed by a lock nut 24A.

The front fork 10 is structured such that a piston 26 brought into slidable contact with an inner periphery of the inner tube 12 is fixed to a piston bolt 25 screwed to a leading end portion of the piston rod 23 inserted to the inner tube 12 from the rod guide portion 19A of the partition wall member 19, and the oil chamber 21 is comparted into a piston rod side oil chamber 21A in which the piston rod 23 is accommodated, and a piston side oil chamber 21B in which the piston rod 23 is not accommodated. The piston 26 is fixed by a piston nut 27.

The front fork 10 always communicates the annular oil chamber 17 with the piston rod side oil chamber 21A via an oil hole 28 provided in the inner tube 12.

The front fork 10 is structured such that an upper spring bearing 31 is attached to a side of a lower end surface facing to the piston side oil chamber 21B of the piston 26 as mentioned below, a lower spring bearing 32 is arranged in a bottom portion of the inner tube 12 formed by the axle bracket 15, and a suspension spring 33 is interposed between the upper spring bearing 31 and the lower spring bearing 32. The front fork 10 absorbs an impact force applied from a road surface when a vehicle travels on the basis of an extending and contracting oscillation of the suspension spring 33. At this time, a spring load adjusting apparatus 100 mentioned below moves the lower spring bearing 32 upward and downward so as to freely adjust a spring load of the suspension spring 33.

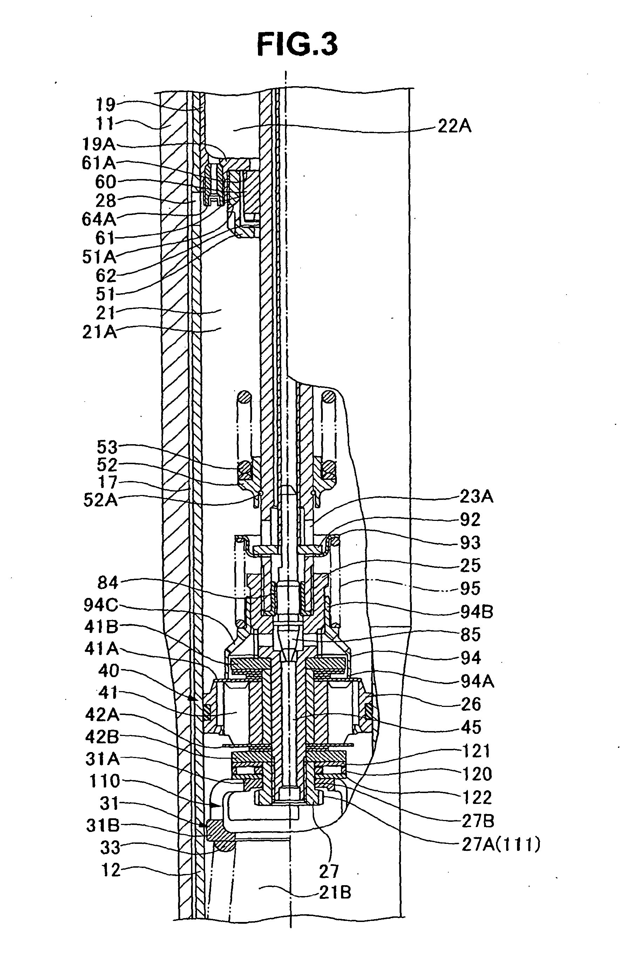

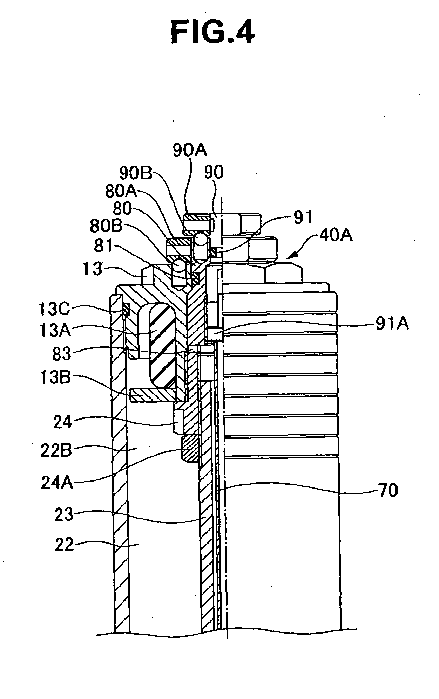

The front fork 10 is provided with a damping force generating apparatus 40 in the piston 26 (FIGS. 3 and 4).

The damping force generating apparatus 40 is provided with a compression side flow path 41 and an extension side flow path 42 (not shown). The compression side flow path 41 is opened and closed by a compression side disc valve 41A (a compression side damping valve) backed up to a valve stopper 41B. The extension side flow path 42 is opened and closed by an extension side disc valve 42A (an extension side damping valve) backed up to a valve stopper 42B. In this case, the valve stopper 41B, the valve 41A, the piston 26, the valve 42A and the valve stopper 42B construct a valve assembly attached to a piston bolt 25, and is pinched by a piston nut 27 screwed to the piston bolt 25.

The damping force generating apparatus 40 is structured such that a damping force adjusting apparatus 40A mentioned in detail below is provided in a center portion of the cap 13, a needle valve 85 of the damping force adjusting apparatus 40A is inserted to a hollow portion of the piston rod 23, and an opening degree of a bypass path 45 provided in the piston rod 23 is adjusted by an upward and downward movement of the needle valve 85. The bypass path 45 bypasses the piston 26, and communicates the piston rod side oil chamber 21A with the piston side oil chamber 21B.

The damping force generating apparatus 40 generates a compression side damping force in a low speed range in a compression side stroke on the basis of a passage resistance of the bypass path 45 an opening degree of which is regulated by the needle valve 85, and generates a compression side damping force in high and middle speed ranges on the basis of a deflection deformation of the compression side disc valve 41A. Further, it generates an extension side damping force in a low speed range in an extension side stroke on the basis of a passage resistance of the bypass path 45 an opening degree of which is regulated by the needle valve 85, and generates an extension side damping force in middle and high speed ranges on the basis of a deflection deformation of the extension side disc valve 42A. The extending and contracting oscillation of the suspension spring 33 mentioned above is controlled by the compression side damping force and the extension side damping force.

The front fork 10 is structured such that a stopper rubber 13A and a stopper plate 13B with which an upper end portion of the partition wall member 19 provided in the inner tube 12 comes into collision at a maximum compression stroke are firmly fixed to a lower end surface of the cap 13, and the maximum compression stroke is controlled by the stopper rubber 13A.

The front fork 10 is structured such that a rebound spring 53 is interposed between a spring sheet 51 fixed by screw to a lower end surface facing to the piston rod side oil chamber 21A of the partition wall member 19 in an upper end side of the inner tube 12, and a spring sheet 52 locked to a stopper ring 52A provided in the piston rod 23. The partition wall member 19 pressurizes the rebound spring 53 with respect to the spring sheet 52 at a time of a maximum extension of the front fork 10, thereby controlling the maximum extension stroke.

In this case, in the front fork 10, a cross sectional area S1 of the annular oil chamber 17 formed by an annular gap between the outer tube 11 and the inner tube 12 is formed larger than a cross sectional area (an area surrounded by an outer diameter) S2 of the piston rod 23 (S1 > S2, however, S1 ≥ S2 may be allowable).

Further, the rod guide portion 19A of the partition wall member 19 and the spring sheet 51 are provided with a check valve 60 which allows an oil flow from the oil reservoir chamber 22 to the piston rod side oil chamber 21A in the compression side stroke and blocks the oil flow from the piston rod side oil chamber 21A to the oil reservoir chamber 22 in the extension side stroke. A valve chamber 61 is provided in an inner periphery of the rod guide portion 19A of the partition wall member 19 and the spring sheet 51, and a check valve 60 is accommodated between a step portion 61A in an upper end side of the valve chamber 61, and a backup spring 62 on the spring sheet 51 mentioned above provided in a lower end side of the valve chamber 61. The check valve 60 is made shorter than an interval between the step portion 61A and the spring sheet 51, and a horizontal groove is formed in a lower end surface of the check valve 60. The check valve 60 is provided in such a manner as to be brought into slidable contact with an inner periphery of the valve chamber 61 provided in the spring sheet 51 so as to be displaceable upward and downward. An outer periphery of the check valve 60 forms a flow path allowing the oil flow to the piston rod side oil chamber 21A from the oil reservoir chamber 22 in a communication path 51A provided in the spring sheet 51, with respect to an inner periphery of the valve chamber 61. The check valve 60 is provided with a bush 63 (not shown) slidably supporting the piston rod 23 in a state of being press-fit into an inner periphery. In the compression side stroke, the check valve 60 moves together with the piston rod 23 going into the inner tube 12 so as to move to a lower side, comes into contact with the spring sheet 51, forming a gap with respect to the step portion 61A. This allows the oil in the oil reservoir chamber 22 to flow into the piston rod side oil chamber 21A from a horizontal groove through the gap with respect to the step portion 61A and the communication path 51A via an outer periphery. In the extension side stroke, the check valve 60 moves together with the piston rod 23 going out of the inner tube 12 so as to move to an upper side, comes into contact with the step portion 61A so as to close the gap with respect to the step portion 61A, and inhibits the oil in the piston rod side oil chamber 21A from being discharged to the oil reservoir chamber 22 in accordance with an inverse path of the compression side stroke mentioned above.

Further, since the rod guide portion 19A of the partition wall member 19 is structured such that an oil seal is not sealed and attached to a periphery of the piston rod 23, a small flow path (an orifice) 64 (not shown) communicating the piston rod side oil chamber 21A with the oil reservoir chamber 22 is structured by a small gap which the bush 63 pressure inserted to the inner periphery of the check valve 60 forms around the piston rod 23 (or a small gap which the check valve 60 forms with respect to the step portion 61A). The small flow gap 64 may be pierced in the rod guide portion 19A of the partition wall member 19, and may be constituted by an orifice means 64A communicating the piston rod side oil chamber 21A with the oil reservoir chamber 22.

An operation of the front fork 10 is as follows.

### (Compression side stroke)

In the compression side stroke, a working fluid at an approaching volumetric capacity of the piston rod 23 going into the inner tube 12 in the compression side stroke is transferred to the annular oil chamber 17 from the oil chamber 21A in the inner periphery of the inner tube 12 via an oil hole 28 of the inner tube 12. At this time, since a volumetric capacity increase amount ΔS1 (a supply amount) of the annular oil chamber 17 is larger than a volumetric capacity increase amount ΔS2 of the piston rod 23, a shortfall (ΔS1 - ΔS2) in an oil necessary supply amount to the annular oil chamber 17 is supplied from the oil reservoir chamber 22 via the check valve 60.

In this compression side stroke, as mentioned above, the compression side damping force is generated in the low speed range on the basis of the passage resistance of the bypass path 45 the opening degree of which is adjusted by the needle valve 85, and generates the compression side damping force in the middle and high speed ranges on the basis of the deflection deformation of the compression side disc valve 41A.

### (Extension side stroke)

In the extension side stroke, the working fluid at a retraction volumetric capacity amount of the piston rod 23 going out of the inner tube 12 in the extension side stroke is transferred to the oil chamber 21A in the inner periphery of the inner tube 12 from the annular oil chamber 17 via the oil hole 28 of the inner tube 12. At this time, since the volumetric capacity reduction amount ΔS1 (a discharge amount) of the annular oil chamber 17 is larger than the volumetric capacity reduction amount ΔS2 of the piston rod 23, a surplus amount (ΔS1 - ΔS2) in the discharge amount of the oil from the annular oil chamber 17 is discharged to the oil reservoir chamber 22 via the small flow path 64.

In this extension side stroke, as mentioned above, the extension side damping force is generated in the low speed range on the basis of the passage resistance of the bypass path 45 the opening degree of which is adjusted by the needle valve 85, and the extension side damping force is generated in the middle and high speed ranges on the basis of the deflection deformation of the extension side disc valve 42A. Further, the extension side damping force is also generated on the basis of the passage resistance of the small flow path 64 mentioned above.

A description will be given below of the damping force adjusting apparatus 40A.

The damping force adjusting apparatus 40A is structured, as shown in FIGS. 3 and 4, such that a hollow portion of the piston rod 23 is provided with only one push rod 70 having a non-circular cross section which is movable in a rotational direction and an axial direction, a D-shaped cross section in the present embodiment. A first adjusting portion 80 and a second adjusting portion 90 are coaxially arranged in an upper portion of the front fork 10 and on an extension of the bush rod 70. In this case, the first adjusting portion 80 moves the push rod 70 in the rotational direction, and the second adjusting portion 90 moves the push rod 70 in the axial direction. Further, the damping force adjusting apparatus 40A is structured such that the needle valve 85 slidably locking into the non-circular cross section of the push rod 70 is screwed with the hollow portion of the piston rod 23, the needle valve 85 is moved via a screwing motion on the basis of a rotation of the first adjusting portion 80. An opening degree of the bypass path 45 is adjusted by the needle valve 85, and the damping force on the basis of the passage resistance of the bypass path 45 can be adjusted by extension. Further, the damping force adjusting apparatus 40A energizes a compression side disc valve 41A in a closing direction of the compression side disc valve 41A, by a spring 95 which comes into collision with the push rod 70 in the axial direction, and can adjust the compression side damping force on the basis of the deflection deformation of the compression side disc valve 41A. A description will be given below of structures of the first adjusting portion 80 and the second adjusting portion 90, a damping force adjusting structure using the needle valve 85, and a damping force adjusting structure using the spring 95.

### (Structure of first adjusting portion 80 and second adjusting portion 90) (FIGS. 3 and 4)

The cap 13 constituting a cap assembly is screwed to an upper end opening portion of the outer tube 11 via an O-ring 13C in a liquid tight manner. A mounting collar 24 is screwed to a lower end opening side of the cap 13, and an upper end portion of the piston rod 23 is screwed to the mounting collar 24 so as to be fixed by the lock nut 24A.

The first adjusting portion 80 is inserted and attached in a liquid tight manner from a lower end opening side of a center hole of the cap 13 via an O-ring 81, is engaged with an intermediate step portion of the cap 13 in an axial direction so as to be prevented from coming off to an upper side, and comes into contact with an upper end surface of the mounting collar 24 screwed to the lower end opening side of the cap 13 in the axial direction so as to be prevented from coming off to a lower side. As a result, the first adjusting portion 80 is rotatably provided in the cap 13 by using an operation knob 80A in an outer periphery of an upper end. A lower end surface coming into contact with the mounting cover 24 of the first adjusting portion 80 is provided with a horizontal groove, and both side projections of an engagement piece 83 are engaged with the horizontal groove approximately with no play in the rotational direction. An outer periphery of the non-circular cross section (the D-shaped cross section) of the push rod 70 is passed through a non-circular hole (a D-shaped hole) provided in the center of the locking piece 83, is engaged in the rotational direction approximately with no play, and is slidable in the axial direction. Accordingly, the first adjusting portion 80 can move the push rod 70 in the rotational direction. Reference numeral 80B denotes a detent mechanism with respect to the operation knob 80A.

The second adjusting portion 90 is inserted and attached in a liquid tight manner from a lower end opening side of a center hole of the first adjusting portion 80 via an O-ring 91, and is engaged with an intermediate step portion of the first adjusting portion 80 in an axial direction so as to be prevented from coming off to an upper side. A pressing element 91A is engaged with a lower end portion of the second adjusting portion 90 in such a manner as to be engaged in the rotational direction and be slidable in the axial direction. A lower end surface of the pressing element 91A comes into contact with an upper end surface of the push rod 70 passing through the non-circular hole of the engagement piece 83 engaging with the side of the first adjusting portion 80 with no gap in the axial direction. In this case, the push rod 70 is energized upward by a spring force of a spring 95 mentioned later, and an upper end surface thereof always comes into contact with the lower end surface of the pressing element 91A of the second adjusting portion 90. The second adjusting portion 90 is moved by a screwing motion with respect to the first adjusting portion 80 by using the operation knob 90 in the upper end surface, and can move the push rod 70 in the axial direction. Reference numeral 90B denotes a detent mechanism with respect to the operation knob 90A.

### (Damping force adjusting structure using needle valve 85) (FIG. 3)

An inner base 84 is inserted and attached to a lower end portion of the hollow portion of the piston rod 23, and a lower end surface of the piston rod 23 and an inner diameter step portion of the piston bolt 25 fix a lower end flange of the inner base 84 in a pinching manner. The inner base 84 may be press-fit into the hollow portion of the piston rod 23. The needle valve 85 is inserted in a liquid tight manner to an inner periphery of the inner base 84 fixed to the piston rod 23 as mentioned above, and a thread portion of an intermediate portion of the needle valve 85 is screwed to the inner periphery of the piston bolt 25. The non-circular cross section of the upper end portion of the needle valve 85, the non-circular cross sectional portion formed in the D-shaped cross section in the present embodiment, is locked into the non-circular cross section in the lower end portion of the push rod 70 inserted to the hollow portion of the piston rod 23 approximately with no play, in such a manner as to be slidable in the axial direction and be engaged in the rotational direction.

If the first adjusting portion 80 moves the push rod 70 in the rotational direction as mentioned above, the needle valve 85 engaging with the push rod 70 in the rotational direction is moved by a screwing motion with respect to the piston bolt 25, and is moved forward and backward with respect to the valve sheet in the upper end portion of the vertical hole of the bypass path 45 provided in the piston bolt 25. The needle valve 85 adjusts the opening degree of the bypass path 45, and can adjust the damping force in the compression side and the extension side on the basis of the passage resistance of the bypass path 45 by extension.

In this case, when the first adjusting portion 80 moves, by a screwing motion, the needle valve 85 via the push rod 70, the needle valve 85 idle moves with respect to the center hole of the pressing piece 92 for the spring 95 mentioned later, and does not affect the spring 95.

### (Damping force adjusting structure using spring 95) (FIG. 3)

Long hole-shaped guide holes 23A extending in an axial direction are provided in both sides in a diametrical direction of the lower end side of the piston rod 23, and both side projections of the pressing piece 92 are locked into the guide holes 23A approximately with no play so as to be slidable in the axial direction. The lower end surface of the push rod 70 inserted to the hollow portion of the piston rod 23 directly comes into contact with the upper surface of the pressing piece 92. The non-circular cross sectional portion of the needle valve 85 locked into the lower end portion of the push rod 70 as mentioned above is loosely fitted to a circular hole provided in the center of the pressing piece 92 in such a manner as to be movable in the axial direction.

Around the lower end portion (the piston bolt 25) of the piston rod 23, there are arranged a spring bearing 93 which comes into contact with both end projections of the pressing piece 92 from the lower side, and a valve presser foot 94 which comes into collision with an upper surface (a back surface) of the compression side disc valve 41A, and the valve pressing spring 95 is interposed between the spring bearing 93 and the valve presser foot 94. The spring bearing 93 is formed in a cup shape, comes into contact with both side projections of the pressing piece 92 in the lower end of the inner periphery of the cup, and seats the spring 95 on the upper end outer peripheral flange of the cup. The valve presser foot 94 is provided with a circular ring-shaped pressing portion 94A which comes into contact with an appropriate outer diameter position on the upper surface of the compression side disc valve 41A circumferentially continuously (or intermittently). A slide portion 94B is slidably guided to the upper end outer periphery of the piston bolt 25, and an oil path 94C communicats the piston rod side oil chamber 21A with the compression side flow path 41, the extension side flow path 42, and the bypass path 45, and seats the spring 95 on an outer peripheral step portion.

If the second adjusting portion 90 moves the push rod 70 in the axial direction as mentioned above, the pressing piece 92 with which the lower end surface of the push rod 70 comes into contact moves the spring bearing 93 upward and downward so as to extend and compress the valve pressing spring 95, and adjusts a set load of the spring 95. Accordingly, the set load of the spring 95 energizes the compression side disc valve 41A in a direction of closing the compression side disc valve 41A via the valve presser foot 94, and it is possible to adjust the compression side damping force on the basis of the deflection deformation of the compression side disc valve 41A. The valve presser foot 94 can be replaced by a structure in which the diameter of the presser foot portion 94A is different. The valve presser foot 94 provided with the large-diameter presser foot portion 94A presses the outer peripheral side of the compression side disc valve 41A so as to enlarge the damping force from the low speed range of the piston speed. The valve presser foot 94 provided with the small-diameter presser foot portion 94A presses the inner peripheral side of the compression side disc valve 41A so as to enlarge the damping force in the middle to high speed range of the piston speed.

In this case, when the second adjusting portion 90 moves the pressing piece 92 via the push rod 70, the push rod 70 and the pressing piece 92 idle move in the axial direction with respect to the needle valve 85, and does not affect the needle valve 85.

Next, a description will be given of a spring load adjusting apparatus 100 adjusting the spring load of the suspension spring 33 by moving the lower spring bearing 32 upward and downward. In this case, the lower spring bearing 32 is formed in a closed-end tubular shape, has a bottom plate 32A contacting against a lower end portion, and is inserted to an inner periphery of the inner tube 12 so as to be movable upward and downward via an O-ring 32B.

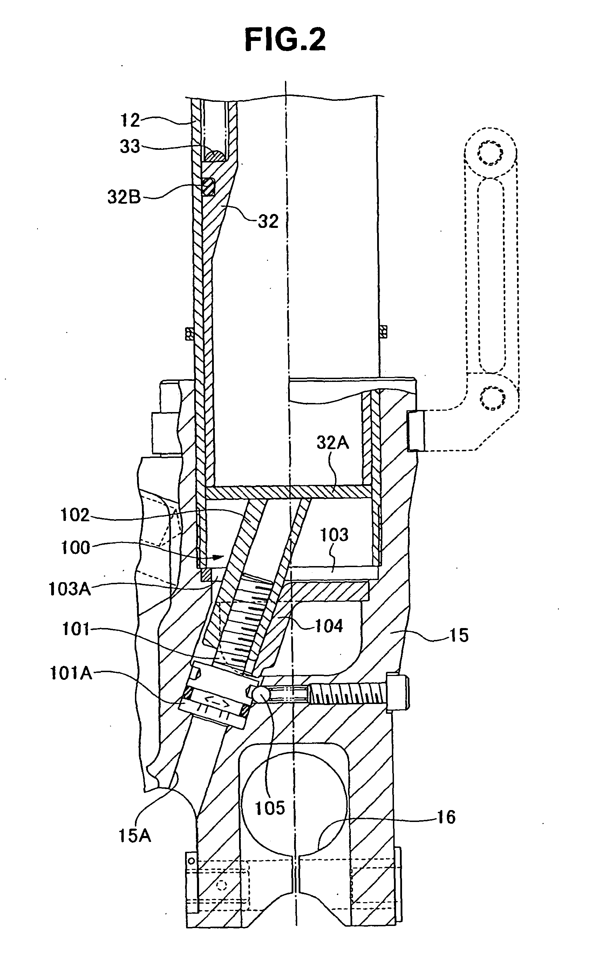

The spring load adjusting apparatus 100 supports the bottom plate 32A of the lower spring bearing 32 by an adjustment bolt 101 facing an external portion at a position deviated from the axle mounting hole 16 of the axle bracket 15 constituting the bottom portion of the inner tube 12 (near a side of the axle mounting hole 16), as shown in FIG. 2, and moves the lower spring bearing 32 upward and downward in accordance with a screw motion of the adjustment bolt 101 so as to adjust the spring load of the suspension spring 33.

At this time, the adjustment bolt 101 is arranged obliquely with respect to a center axis passing through the axle mounting hole 16 of the inner tube 12, and supports the adjust bolt 101 in the inner surface of the bottom portion of the inner tube 12 in a state of preventing the adjust bolt 101 from coming off to the external portion. An operation portion 101A of the adjust bolt 101 is faced to the external portion from an operating hole 15A of the axle bracket 15. Further, an adjustment nut 102 is screwed with a threaded portion of the adjustment bolt 101 facing the inner portion of the inner tube 12. The adjustment nut 102 is prevented from rotating by a rotation preventing means provided in the inner portion of the inner tube 12, and makes the bottom plate 32A of the lower spring bearing 32 come into contact with a leading end of the adjust nut 102. The rotation preventing means 103 is constituted by a washer pinched between the inner tube 12 and the axle bracket 15, and inserts a deformed portion of the adjust nut 102 to a rotation preventing deformed slit 103A provided in the washer. Further, a slider 104 is provided in a lower portion of the rotation preventing means 103 in the bottom portion of the inner tube 12. An outer surface of the adjustment nut 102 is slidably guided by the slider 104, and the adjustment bolt 101 can not be pressed from the external portion. Reference numeral 105 denotes a detent mechanism with respect to the adjustment bolt 101.

If the adjustment bolt 101 is moved by a screwing motion via the operation portion 101A by a tool inserted to the operating hole 15A of the axle bracket 15, the adjust nut 102 is moved upward and downward, and the lower spring bearing 32 (the bottom plate 32A) coming into contact with the adjust nut 102 is moved upward and downward. The lower spring bearing 32 adjusts an initial length of the suspension spring 33 with respect to the upper spring bearing 31 in the piston rod 23 side, and adjusts the spring load of the suspension spring 33.

A description will be given below of an upper spring bearing attaching structure 110 which can reduce the rotational friction which the upper and lower spring bearings 31 and 32 apply to the suspension spring 33 when the suspension spring 33 is extended and compressed.

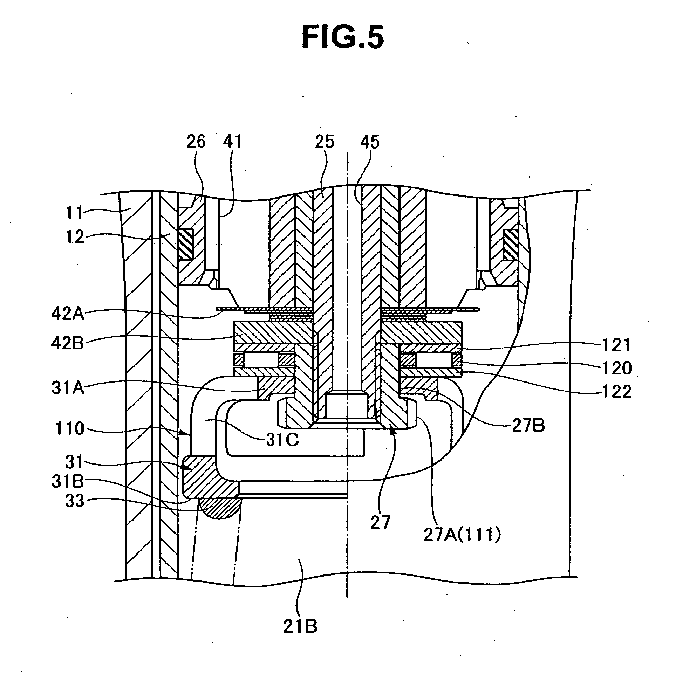

The upper spring bearing attaching structure 110 attaches the upper spring bearing 31 to the leading end portion of the piston bolt 25 of the piston rod 23 corresponding to the piston support member, that is, the leading end portion of the piston bolt 25 closer to the suspension spring 33 than the piston 26, in such a manner as to be rotatable and to be prevented from falling away, as shown in FIGS. 3 and 5.

Specifically, at a time of setting the piston nut 27 fixing the piston 26, the disc valves 41A and 42A, and the valve stoppers 41B and 42B in the leading end portion of the piston bolt 25, as mentioned above, the structure is made such that the piston nut 27 has a tool engagement portion 27A and a small-diameter portion 27B having a smaller diameter than the tool engagement portion 27A formed in a step shape near the tool engagement portion 27A. An end surface of the small-diameter portion 27B of the piston nut 27 screwed to the piston bolt 25 is brought into contact with the valve stopper 42B. Further, the tool engagement portion 27A of the piston nut 27 is formed as an outer evagination portion 111, and the upper spring bearing 31, a bearing member 120 and upper and lower bearing races 121 and 122 are loaded to the small-diameter portion 27B.

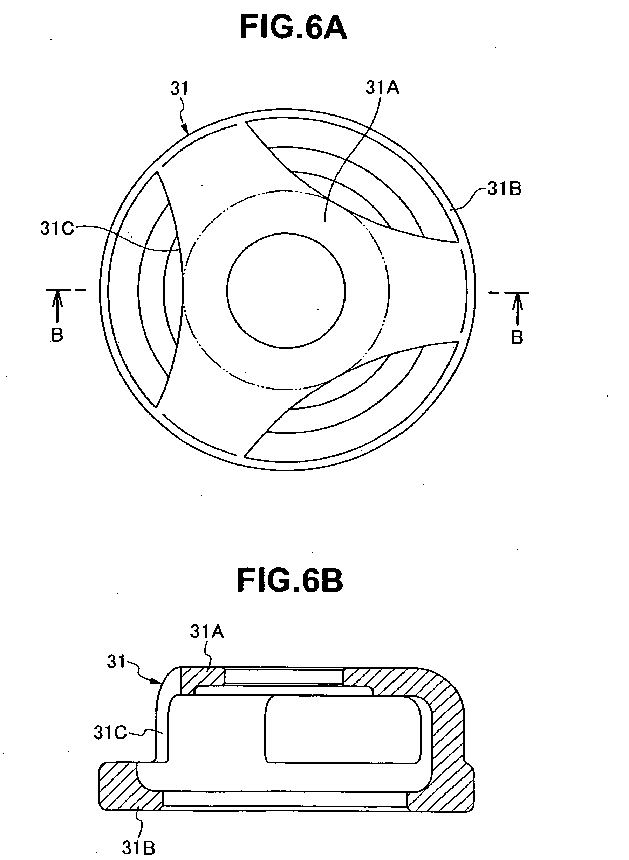

The upper spring bearing 31 is formed in a perforated cage shape as shown in FIGS. 6A and 6B, and is provided with a mounting seat 31A which is attached to the small-diameter portion 27B of the piston nut 27. The upper spring bearing 31 can lock to the tool engagement portion 27A (the outer peripheral evagination portion 111), comes into contact with the lower bearing race 122, in a center portion of a cage bottom portion, and is provided with a circular ring shaped spring bearing seat 31B in a cage opening portion. Reference numeral 31C denotes a flow path.

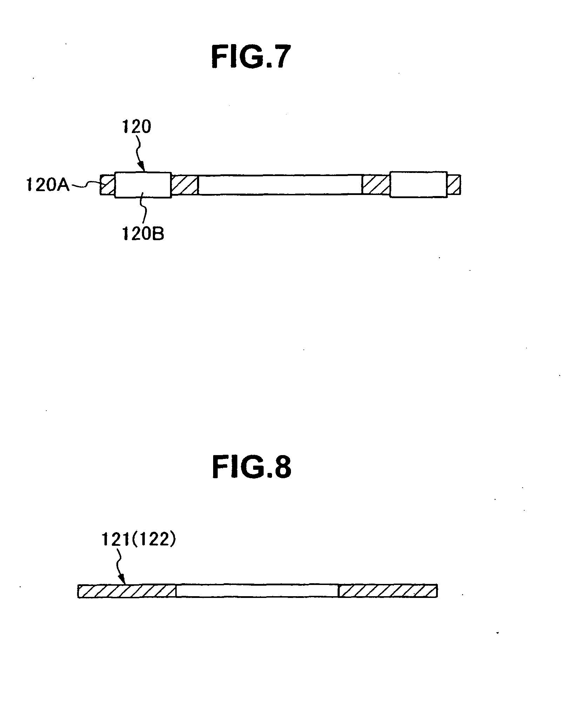

The bearing member 120 holds a roller 120B in each of a lot of holding grooves which are provided side by side in a peripheral direction of a perforated disc-shaped holder 120A attached to the small-diameter portion 27B of the piston nut 27, as shown in FIG. 7. The bearing races 121 and 122 are formed in a perforated disc shape attached to the small-diameter portion 27B of the piston nut 27, as shown in FIG. 8.

Accordingly, the upper spring bearing attaching structure 110 is assembled by screwing the piston nut 27 which has already installed the bearing member 120 and the bearing races 121 and 122 to the small-diameter portion 27B to the piston bolt 25, when constructing the valve assembly mentioned above by inserting and attaching the piston 26, the disc valves 41A and 42A and the valve stoppers 41B and 42B to the piston bolt 25. Accordingly, the upper spring bearing 31 is rotatably provided in the small-diameter portion 27B formed in the step shape in the valve stopper 42B side with respect to the outer peripheral evagination portion 111 (the tool engagement portion 27A) of the piston nut 27. The upper spring bearing 31 is prevented from coming off from the outer peripheral evagination portion 111 of the piston nut 27, and the upper spring bearing 31 interposes the bearing member 120, and the bearing races 121 and 122 with respect to the valve stopper 42B. When the upper spring bearing 31 supports the suspension spring 33 with respect to the lower spring bearing 32, the upper spring bearing 31 becomes rotatable via a small gap with respect to an end surface of the outer peripheral evagination portion 111 (the tool engagement portion 27A) of the piston nut 27.

In accordance with the present embodiment, the following operations and effects can be achieved.
(a) Since the upper spring bearing 31 is rotatably attached to the leading end portion of the piston rod 23 at a time of interposing the suspension spring 33 between the lower spring bearing 32 in the bottom portion side of the inner tube 12 and the upper spring bearing 31 in the piston rod 23 side, it is possible to absorb the torsion caused by the extension and compression of the suspension spring 33 on the basis of the rotation of the upper spring bearing 31. Accordingly, it is possible to reduce the rotational friction which the upper end lower spring bearings 31 and 32 applied to the suspension spring 33, it is possible to smoothly extend and compress the suspension spring 33, and it is possible to improve an actuation performance of the front fork 10.
(b) An assembling procedure of the front fork 10 is executed by inserting the lower spring bearing 32 and the suspension spring 33 from the upper end of the inner tube 12, thereafter inserting the piston rod 23 which has previously attached the upper spring bearing 31 so as to be rotatable and to be prevented from falling away from the upper end of the inner tube 12 while being set downward, and seating the upper spring bearing 31 on the suspension spring 33. The upper spring bearing 31 can correctly seat on the suspension spring 33 in the correct assembling order and posture without dropping.
(c) The upper spring bearing 31 is prevented from coming off from the outer peripheral evagination portion 111 of the piston nut 27, interposes the bearing member 120 with respect to the valve stopper 42B, and is attached to the leading end portion of the piston rod 23 so as to be rotatable and to be prevented from falling away.
   It is possible to previously attach the upper spring bearing 31 and the bearing member 120 to the leading end portion of the piston rod 23 so as to be rotatable and to be prevented from falling away.
(d) The piston nut 27 is structured such that the tool engagement portion 27A is formed as the outer peripheral evagination portion, and the upper spring bearing 31 and the bearing member are mounted to the small-diameter portion 27B near the tool engagement portion 27A. Accordingly, it is possible to attach the upper spring bearing 31 and the bearing member between the tool engagement portion 27A of the piston nut 27 and the valve stopper with a small gap in such a manner as to be rotatable and to be prevented from falling away, when fastening the piston nut 27 to the leading end portion of the piston rod 23.

As heretofore explained, embodiments of the present invention have been described in detail with reference to the drawings. However, the specific configurations of the present invention are not limited to the illustrated embodiments but those having a modification of the design within the range of the presently claimed invention are also included in the present invention. For example, the upper spring bearing in accordance with the present invention is not limited to be attached to the piston nut as far as it is attached to the leading end portion of the piston support member. Further, the bearing member in accordance with the present invention may employ a sliding bearing or the like coated by Teflon (trade mark) or the like.

## Claims

1. A hydraulic shock absorber in which an inner tube in an axle side is slidably inserted into an outer tube in a vehicle body side, a partition wall member is provided in an inner periphery of the inner tube, a working fluid chamber is provided on a lower side of the partition wall member, an oil reservoir chamber is provided on an upper side of the partition wall member, a piston support member attached to the outer tube side is inserted into the working fluid chamber through the partition wall member, a piston sliding within the working fluid chamber is provided in a leading end portion of the piston support member, and a suspension spring is interposed between an upper spring bearing in the piston support member side and a lower spring bearing in a bottom portion side of the inner tube, within the working fluid chamber of the inner tube, **characterised in that**
the upper spring bearing (31) is attached to the leading end portion of the piston support member, with the leading end portion being closer to the suspension spring than the piston, and in such a manner as to be rotatable and to be prevented from falling away.

2. A hydraulic shock absorber as claimed in claim 1, wherein a piston nut fixing the piston, a valve and a valve stopper is provided in the leading end portion of the piston support member, the upper spring bearing is rotatably provided in the valve stopper side with respect to an outer peripheral evagination portion of the piston nut, the upper spring bearing is prevented from coming off from the outer peripheral evagination portion of the piston nut, and a bearing member is interposed between the valve stopper and the upper spring bearing.

3. A hydraulic shock absorber as claimed in claim 2, wherein the piston nut has a tool engagement portion and a small-diameter portion having a smaller diameter than the tool engagement portion near the tool engagement portion, the tool engagement portion is formed as the outer peripheral evagination portion, and the upper spring bearing and the bearing member are mounted to the small-diameter portion.

4. A hydraulic shock absorber as claimed in claim 2, wherein the piston support member is formed as a piston rod, a piston bolt is screwed to a leading end portion of the piston rod, a valve assembly having the piston, the valve and the valve stopper is attached to the piston bolt, and the valve assembly is fixed by the piston nut screwed to the piston bolt.

5. A hydraulic shock absorber as claimed in claim 3, wherein the bearing member holds a roller in each of a plurality of holding grooves which are provided side by side in a peripheral direction of a perforated disc-shaped holder attached to the small-diameter portion of the piston nut, and upper and lower bearing races attached to the small-diameter portion of the piston nut are provided on upper and lower sides of the bearing member.

6. A hydraulic shock absorber as claimed in claim 5, wherein the upper spring bearing is formed in a perforated cage shape, a center portion of a cage bottom portion is provided with a mounting seat which is attached to the small-diameter portion of the piston nut, is lockable to the tool engagement portion and comes into contact with the lower bearing race, and a circular ring-shaped spring bearing seat is provided in a cage opening portion.

## Patentansprüche

1. Hydraulischer Stoßdämpfer, wobei ein inneres Rohr auf einer Achsenseite verschiebbar in ein äußeres Rohr auf einer Fahrzeugkarosserieseite eingeführt ist, ein Trennwandelement innerhalb eines Innenumfangs des inneren Rohrs vorgesehen ist, eine Arbeitsfluidkammer auf einer unteren Seite des Trennwandelements vorgesehen ist, eine Ölspeicherkammer auf einer oberen Seite des Trennwandelements vorgesehen ist, ein Kolbenträgerelement, welches auf der Seite des äußeren Rohrs angebracht ist, durch das Trennwandelement hindurch in die Arbeitsfluidkammer eingeführt ist, ein Kolben, welcher in der Arbeitsfluidkammer gleitet, in einem vorderen Endabschnitt des Kolbenträgerelements vorgesehen ist und eine Aufhängungsfeder zwischen einem oberen Federlager auf der Kolbenträgerelementsseite und einem unteren Federlager auf einer Seite eines unteren Abschnitts des inneren Rohrs in der Arbeitsfluidkammer des inneren Rohrs eingefügt ist, **dadurch gekennzeichnet, dass**
das obere Federlager (31) an dem vorderen Endabschnitt des Kolbenträgerelements angebracht ist, wobei sich der vordere Endabschnitt näher bei der Aufhängungsfeder als der Kolben befindet, und in einer derartigen Weise, dass dieses drehbar ist und verhindert wird, dass dieses abfällt.

2. Hydraulischer Stoßdämpfer nach Anspruch 1, wobei eine Kolbenmutter, welche den Kolben befestigt, ein Ventil und ein Ventilsperrglied in dem vorderen Endabschnitt des Kolbenträgerelements vorgesehen sind, das obere Federlager drehbar auf der Ventilsperrgliedsseite bezüglich eines Außenumfangs-Ausschubsabschnitts der Kolbenmutter vorgesehen ist, verhindert wird, dass sich das obere Federlager von dem Außenumfangs-Ausschubsabschnitt löst, und ein Lagerelement zwischen dem Ventilsperrglied und dem oberen Federlager eingefügt ist.

3. Hydraulischer Stoßdämpfer nach Anspruch 2, wobei die Kolbenmutter einen Werkzeugeingriffsabschnitt und einen Abschnitt mit einem kleinen Durchmesser, welcher einen kleineren Durchmesser als der Werkzeugeingriffsabschnitt aufweist, nahe bei dem Werkzeugeingriffsabschnitt aufweist, der Werkzeugeingriffsabschnitt als Außenumfangs-Ausschubsabschnitt ausgebildet ist und das obere Federlager und das Lagerelement an dem Abschnitt mit einem kleinen Durchmesser montiert sind.

4. Hydraulischer Stoßdämpfer nach Anspruch 2, wobei das Kolbenträgerelement als Kolbenstange ausgebildet ist, ein Kolben-Schraubenbolzen mit einem vorderen Endabschnitt der Kolbenstange verschraubt ist, eine Ventilanordnung, welche den Kolben, das Ventil und das Ventilsperrglied aufweist, an dem Kolben-Schraubenbolzen angebracht ist und die Ventilanordnung durch die Kolbenmutter befestigt ist, welche mit dem Kolben-Schraubenbolzen verschraubt ist.

5. Hydraulischer Stoßdämpfer nach Anspruch 3, wobei das Lagerelement eine Rolle in jeder Haltenut einer Vielzahl davon, welche nebeneinander in einer Umfangsrichtung einer perforierten scheibenförmigen Halterung, welche an dem Abschnitt der Kolbenmutter mit einem kleinen Durchmesser angebracht ist, vorgesehen sind, hält und ein oberer und ein unterer Lagerlaufring, welche an dem Abschnitt der Kolbenmutter mit einem kleinen Durchmesser angebracht sind, auf der oberen und der unteren Seite des Lagerelements vorgesehen sind.

6. Hydraulischer Stoßdämpfer nach Anspruch 5, wobei das obere Federlager in Gestalt eines perforierten Käfigs ausgebildet ist, ein mittlerer Abschnitt eines unteren Käfigabschnitts mit einem Montage-Auflagestück versehen ist, welches an dem Abschnitt der Kolbenmutter mit einem kleinen Durchmesser angebracht ist, an dem Werkzeugeingriffsabschnitt arretierbar ist und in Kontakt mit dem unteren Lagerlaufring gelangt, und ein kreisförmiges ringförmiges Federlager-Auflagestück in einem Käfigöffnungsabschnitt vorgesehen ist.

## Revendications

1. Amortisseur hydraulique dans lequel un tube intérieur du côté d'un axe est inséré de façon glissante dans un tube extérieur du côté d'un châssis de véhicule, un élément formant cloison de séparation est placé dans une périphérie intérieure du tube intérieur, une chambre de fluide de travail est prévue du côté inférieur de l'élément formant cloison de séparation, une chambre formant réservoir d'huile est prévue du côté supérieur de l'élément formant cloison de séparation, un élément de support de piston fixé du côté tube extérieur est inséré dans la chambre de fluide de travail à travers l'élément formant cloison de séparation, un piston glissant dans la chambre de fluide de travail est placé dans une partie d'extrémité avant de l'élément de support de piston, et un ressort de suspension est intercalé entre une portée supérieure de ressort du côté de l'élément de support de piston et une portée inférieure de ressort du côté de la partie inférieure du tube intérieur, dans la chambre de fluide de travail du tube intérieur,
**caractérisé en ce que** la portée supérieure de ressort (31) est fixée à la partie d'extrémité avant de l'élément de support de piston, la partie d'extrémité avant étant plus proche du ressort de suspension que le piston, et de manière à pouvoir tourner et en étant empêchée de tomber.

2. Amortisseur hydraulique selon la revendication 1, dans lequel un écrou de piston fixant le piston, une valve et une butée de valve sont prévus dans la partie d'extrémité avant de l'élément de support de piston, la portée supérieure de ressort est placée à rotation du côté de la butée de valve par rapport à une partie d'évagination périphérique extérieure de l'écrou de piston, la portée supérieure de ressort est empêchée de sortir de la partie d'évagination périphérique extérieure de l'écrou de piston, et un élément de support est intercalé entre la butée de valve et la portée supérieure de ressort.

3. Amortisseur hydraulique selon la revendication 2, dans lequel l'écrou de piston comporte une partie d'engagement d'outil et une partie de petit diamètre ayant un diamètre plus petit que la partie d'engagement d'outil près de la partie d'engagement d'outil, la partie d'engagement d'outil forme la partie d'évagination périphérique extérieure, et la portée supérieure de ressort et l'élément de support sont montés sur la partie de petit diamètre.

4. Amortisseur hydraulique selon la revendication 2, dans lequel l'élément de support de piston forme une tige de piston, un boulon de piston est vissé sur une partie d'extrémité avant de la tige de piston, un ensemble de valve comportant le piston, la valve et la butée de valve est fixé au boulon de piston, et l'ensemble de valve est fixé par l'écrou de piston vissé sur le boulon de piston.

5. Amortisseur hydraulique selon la revendication 3, dans lequel l'élément de support maintient un rouleau dans chacune d'une pluralité de gorges de maintien qui sont formées côte à côte dans une direction périphérique d'un support en forme de disque perforé fixé à la partie de petit diamètre de l'écrou de piston, et des chemins de roulement supérieur et inférieur solidaires de la partie de petit diamètre de l'écrou de piston sont prévus sur les côtés supérieur et inférieur de l'élément de support.

6. Amortisseur hydraulique selon la revendication 5, dans lequel la portée supérieure de ressort a la forme d'une cage perforée, une partie centrale d'une partie inférieure de cage est pourvue d'un siège de montage qui est solidaire de la partie de petit diamètre de l'écrou de piston, peut être bloqué sur la partie d'engagement d'outil et vient en contact avec le chemin de roulement inférieur, et un siège de support de ressort en forme d'anneau circulaire est prévu dans une partie d'ouverture de cage.
